# EUROPEAN PATENT SPECIFICATION

(11) **EP 0 525 011 B1**
(45) Date of publication and mention of the grant of the patent: **09.08.1995**
(21) Application number: 91907638.0
(22) Date of filing: 01.04.1991
(51) Int. Cl.: B01D 24/08, C02F 1/76, C02F 1/00, C02F 1/50, C02F 9/00

(54) **PORTABLE WATER PURIFICATION SYSTEM**
TRAGBARES WASSERREINIGUNGSSYSTEM
SYSTEME PORTATIF D'EPURATION DE L'EAU

(30) Priority: 05.04.1990 US 503635
(43) Date of publication of application: 03.02.1993
(73) Proprietor: RECOVERY ENGINEERING, INC., Minneapolis, MN 55426 (US)
(72) Inventor: HEMBREE, Richard, David, Minneapolis, MN 55410 (US); SULLIVAN, Brian, F., Minneapolis, MN 55410 (US)
(74) Representative: Christiansen, Ejvind
(86) International application number: US9102248
(87) International publication number: WO9115281

(56) References cited:
- US-A- 2 436 077
- US-A- 2 566 371
- US-A- 2 670 081
- US-A- 3 436 345
- US-A- 3 462 363
- US-A- 3 923 665
- US-A- 4 151 092
- US-A- 4 389 311
- US-A- 4 420 590
- US-A- 4 714 550
- US-A- 4 769 143
- US-A- 4 800 018
- US-A- 5 019 252

## Description

### Technical Field

Broadly, the invention relates to water purification systems. Specifically, the invention relates to portable water purification systems which include both a filter for physically removing particulate contaminants and larger pathogens from the water and a porous body of biocidally effective material for chemically disinfecting the water.

### Background

Sources of fresh water are often contaminated with disagreeable suspended solids and/or harmful pathogens including parasites such as schistosoma, cysts such as Giardia, bacteria such as cholera and viruses such as hepatitis.

Various methods are available for producing potable water from fresh water sources contaminated with suspended solids and/or pathogens. Selection of the most appropriate method requires assessment and balancing of the output requirements, energy availability, and size restrictions.

The most constraining situation in the design of a purification system is the design of a readily transportable system capable of microbiologically purifying water contaminated with both larger pathogens such as cysts (about 6 microns in diameter) which are resistant to chemical disinfection and smaller pathogens such as viruses (about 0.05 microns in diameter) which are difficult to filter.

One method employed to microbiologically purify contaminated water attempts to chemically disinfect the water by dissolving a biocide into the water or percolating the water through a biocidally active porous resin. Exemplary of the chemical disinfection method are United States Patents Nos. 2,566,371, 4,151,092, and 4,298,475.

United States Patent 2,566,371 issued to Quinn discloses a portable water filter apparatus which is used as the basis for the claims. The main purpose of the apparatus is to use adsorbents to remove chemicals from water. The disclosed apparatus shows a water filter having a bucket from which contaminated water is drawn through an inlet filter by a central pump. The pump forces the water into a cylindrical casing which holds filter tubes. The interior bores of the filter tubes, adjacent passageways, and an annular channel are filled with a mass of mixed granular adsorbents. Some of the adsorbent mass is coated with oligodynamic metals. With respect to the claims, the Quinn apparatus shows a container and a filter such that the filter separates the container into first and second portions. The first portion holds contaminated water. A mechanism for forcing the contaminated water from the first portion through the filter into the second portion is provided. There is also a mechanism for directing the filtered water out of the container. The disclosed apparatus does not provide deactivating mechanism to purify water having active bacteria and viruses. In that regard, the apparatus does not produce a three-log reduction in the concentration of either giardia lamblia cysts or bacteria and viruses.

United States Patent No. 4,151,092, issued to Grimm et al., discloses a portable water purification system that includes (i) a supply of biocidally effective tablets, (ii) a first container for retaining a supply of contaminated water treated with the biocide disinfectant, (iii) a second container sealingly receivable within the first container for exerting pressure upon the treated water contained within the first container when forced downward into the first container, and (iv) a replaceable filter cartridge coupled to the base of the second container for filtering the treated water retained within the first container as the water is forced from the first container into the second container. The filter cartridge includes a polyethylene filter to remove suspended solids, a layer of activated carbon to remove the biocide and other distasteful contaminants, and a layer of felt to retain the activated carbon. While generally effective, chemical disinfection requires that the contaminated water be treated for upwards of thirty minutes with biocide prior to removal of the biocide by passage through the activated carbon and/or consumption of the water.

United States Patent No. 4,298,475, issued to Gartner, discloses a portable water purification system operable by mouth suction which comprises a straw sequentially containing filter media for removing suspended solids from the water, biocidally active anion exchange resin for chemically disinfecting the water, filter media for further removing suspended solids, activated carbon for removing distasteful contaminants including residual disinfecting chemical, and filter media for retaining the activated carbon. Gartner does not discuss the pore sizes of the filter medias.

A second method employed to microbiologically purify contaminated water attempts to filter the pathogens from the contaminated water employing a microfilter. While this method can be effective for removing the larger pathogens such as cysts and bacteria, such systems are generally ineffective for removing the smaller pathogens such as viruses, require significant operating energy, produce modest quantities of filtered water, and require frequent filter replacement.

Accordingly, a substantial need exists for a simple and efficient, manually operable, portable, water purification system that can produce significant quantities of microbiologically purified water with minimal effort.

### Brief Description of the Drawings

Figure 1 is a perspective view of one embodiment of the invention in compacted storage form.

Figure 2 is a cross-sectional front view of the invention embodiment depicted in Figure 1 taken along line 2-2.

Figure 3 is a cross-sectional view of the invention embodiment depicted in Figure 2 in operational form.

Figure 4 is a cross-sectional view of the first container portion of the invention embodiment depicted in Figure 2.

Figure 5 is a cross-sectional view of the plunger portion of the invention embodiment depicted in Figure 2.

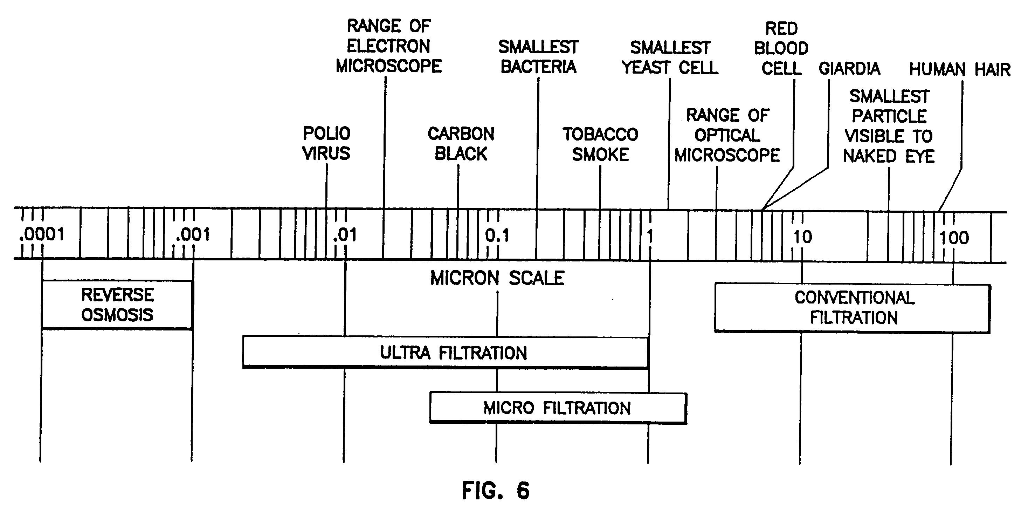

Figure 6 is a logarithmic micron scale indicating the sizes of various particles.

### Summary

A manually operable apparatus for producing potable water from contaminated water which includes a first containter (20) and a filter (80) separating said first container into first (31) and second (32, 33) portions, said first portion (31) holding the contaminated water, and further including a plunger (50) and a porous body (90) of a biocidally effective material. The first portion (31) of said first container (20) is a cylindrical cavity concentrically surrounded by the filter element (80), the first container (20) includes the porous body (90) of a biocidally effective material, and the first portion (31) of said first container (20) and the plunger (50) have sidewalls (23, 53) being movably sealed together by sealing means (29) so that the contaminated water does not pass the sealing means (29) as the plunger (50) is caused to apply force to said contaminated water.

The apparatus further includes (i) a means for abating the formation of a vacuum within the first chamber as the plunger is withdrawn from the first container, (ii) a nozzle in hinged communication with the outlet orifice in the first container for sealing the outlet orifice when placed in a first position and directing the flow of potable water flowing out of the first container through the outlet orifice when placed in a second position, and (iii) a second container having an open end which is operable as a drinking cup for the potable water generated by the system and as a cover for the first container.

### Definitions

As utilized herein, the phrases "microbiologically purified" and "microbiological purification", when used in connection with microbiologically contaminated water, means sufficient removal and/or deactivation of potentially harmful cysts, bacteria and viruses so as to render the water microbiologically potable.

### Detailed Description of One Embodiment of the Invention Including a Best Mode

### Nomenclature

- 10: water purification system
- 20: first container
- 21: top of first container
- 22: bottom of first container
- 23: sidewall of first container
- 23a: upper section of sidewall
- 23b: middle section of sidewall
- 23c: lower section of sidewall
- 24: upper horizontal flange
- 25: lower horizontal flange
- 26: baffle
- 27: first screen
- 28: second screen
- 29: seal
- 30: first chamber
- 30a: upper portion of first chamber
- 30b: lower portion of first chamber
- 31: central cavity subdivision of first chamber
- 32: inner annular cavity subdivision of first chamber
- 33: outer annular cavity subdivision of first chamber
- 33a: upper portion of outer annular cavity
- 33b: lower portion of outer annular cavity
- 34: passage between inner and outer annular cavities
- 35: outlet orifice
- 36: annular notch
- 40: second container
- 41: top of second container
- 42: bottom of second container
- 43: sidewall of second container
- 46: annular rib
- 50: plunger
- 51: proximal end of plunger
- 52: distal end of plunger
- 53: sidewall of plunger
- 54: head
- 55: check-valve
- 56: upper chamber
- 57: lower chamber
- 58: upper orifice
- 59: middle orifice
- 60: lower orifice
- 70: nozzle
- 71: proximal end of nozzle
- 72: distal end of nozzle
- 73: passage through nozzle
- 74: inlet orifice
- 75: outlet orifice
- 80: filter
- 81: top of filter
- 82: bottom of filter
- 83: inner face of filter
- 84: outer face of filter
- 90: biocidally effective resin
- 95: optional active component
- 101: contaminated water
- 102: filtered water
- 103: potable/purified water

### Construction

The invention is a compact, manually operable, portable water purification system capable of producing significant quantities of potable water.

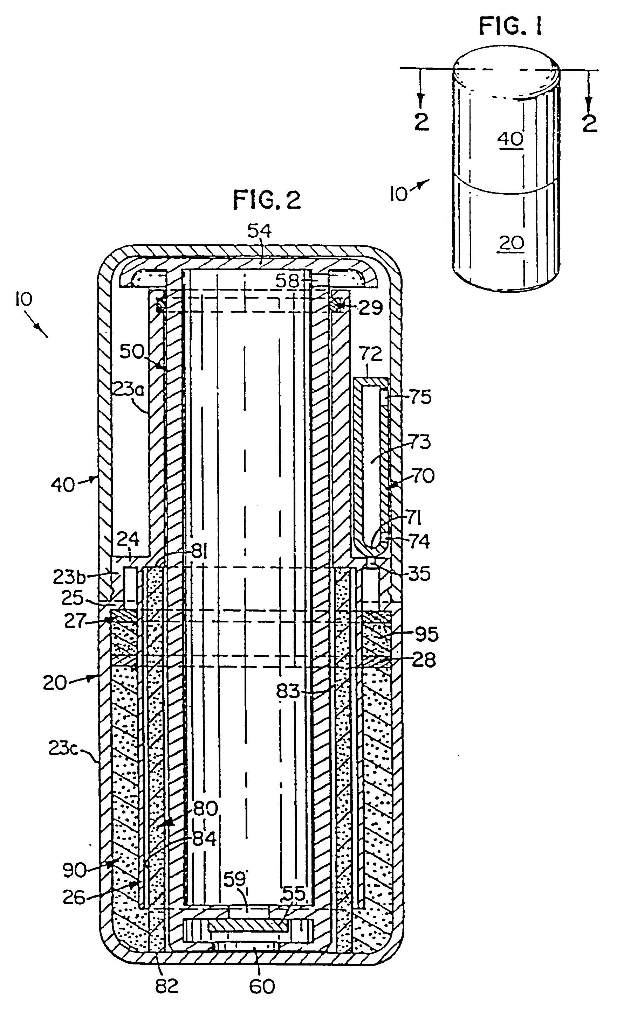

The system will be described with respect to the invention embodiment depicted in Figures 1-5 wherein common reference numbers are maintained throughout the Figures in accordance with the Nomenclature established above.

Referring to Figures 1 through 3, the system 10 includes (i) a cylindrical first container 20 which accommodates a filter 80 and a porous body of biocidally effective material 90 and is operable for retaining a quantity of contaminated water 101 to be purified, (ii) a cylindrical second container 40 operable as a cover for the first container 20 and as a receptacle for retaining the potable water 103 generated by the system 10, and (iii) a cylindrical plunger 50 telescopingly and sealingly receivable within the first container 20 for forcing contaminated water 101 retained within the first container 20 through the filter 80 and the porous body of biocidally effective material 90 accommodated within the first container 20.

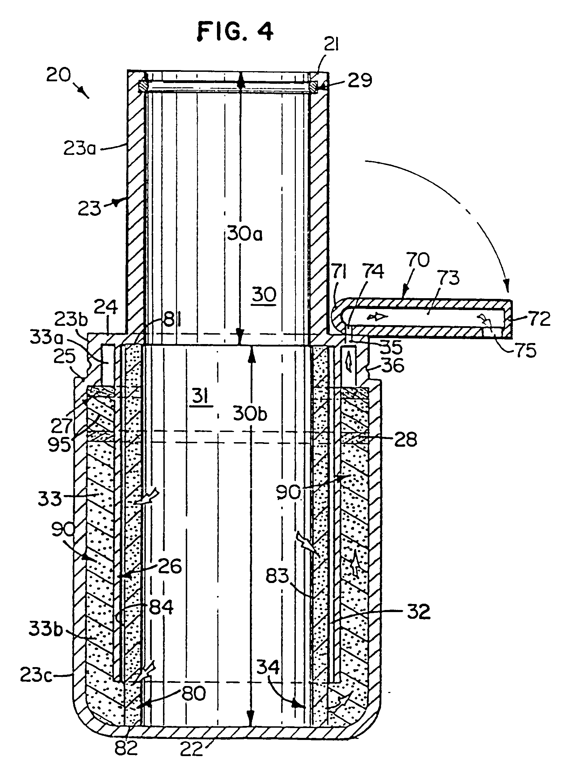

Referring to Figure 4, the first container 20 defines a cylindrical first chamber 30 which is subdivided into an upper portion 30a and a lower portion 30b by an upper horizontal annular flange 24 which changes the diameter of the cylindrical first chamber 30. The upper portion 30a of the first chamber 30 has a smaller diameter than the lower portion 30b of the first chamber 30.

The first container 20 also includes a lower horizontal annular flange 25 immediately below the upper horizontal annular flange 24 which further increases the diameter of the lower portion 30b of the first chamber 30. The upper 24 and lower 25 horizontal annular flanges divide the container sidewall 23 into an upper sidewall section 23a between the top 21 of the first container 20 and the upper horizontal annular flange 24, a middle sidewall section 23b between the upper 24 and a lower 25 horizontal annular flanges, and a lower sidewall section 23c between the lower horizontal annular flange 25 and the bottom 22 of the first container 20.

A cylindrical baffle 26 extends vertically within the first chamber 30 from the upper horizontal flange 24 to proximate the bottom 22 of the first container 20. The baffle 26 terminates above the bottom 22 of the first container 20 so as to define an annular passage 34 around the baffle 26.

The filter 80 accommodated within the first container 20 is cylindrical in shape and positioned inside the baffle 26. The top 81 and bottom 82 of the filter 80 are sealingly coupled to the upper horizontal annular flange 24 and the bottom 22 of the first container 20 respectively. The filter 80 and baffle 26 separate the lower portion 30b of the first chamber 30 into (i) a central cylindrical cavity 31 defined by the filter 80, (ii) an inner annular cavity 32 defined by the filter 80 and the baffle 26, and (iii) an outer annular cavity 33 defined by the baffle 26 and the lower section 23c of the sidewall 23.

The inner surface 83 of the filter 80 is substantially vertically aligned with the inner surface of the upper portion 30a of the first container 30 so as to provide a substantially continuous surface to reduce the space provided between the sidewall of the plunger 50 and the sidewall of the first container 20 and the interior surface of the filter 80.
A first annular screen 27 is positioned within the outer annular cavity 33 in abutment with the lower horizontal annular flange 25 and separates the outer annular cavity 33 into an upper portion 33a and a lower portion 33b. The upper portion 33a of the outer annular cavity 33 is defined by the upper horizontal annular flange 24, the middle section 23b of the first container sidewall 23, the baffle 26, and the first annular screen 27. The lower portion 33b of the outer annular cavity 33 is defined by the first annular screen 27, the lower section 23c of the first container sidewall 23, the baffle 26, and the bottom 22 of the first container 20.

An outlet orifice 35 for the upper portion 33a of the outer annular cavity 33 extends through the upper horizontal flange 24.

The lower portion 33b of the outer annular cavity 33 is packed with a layer of porous biocidally active material 90 and optionally with one or more layers of an active component 95 such as a layer of activated carbon for removing molecules which contribute undesired taste and odor, a layer of a chelating agent to remove hardness ions, and the like. The first screen 27 prevents the biocidally effective material 90 and/or optional active component(s) 95 from flowing out of the first container 20 through the outlet orifice 35 along with the purified water ***.

The filter 80, baffle 26, screen 27, and biocidally effective material 90 may be retained within a replaceable cartridge (not shown) which is threadably engageable within the lower portion 30b of the first chamber 30 so as to sealingly contact the upper horizontal flange 24. The bottom of the cartridge (not shown) would form the bottom 22 of the first container 20 while the sides of the cartridge (not shown) would define a double sidewall with the lower section 23c of the first container sidewall 23.

A nozzle 70 is hingedly coupled to the first container 20 at the upper horizontal flange 24 and placed in fluid communication with the outlet orifice 35 in the first container 20. The proximal end 71 of the nozzle 70 is rounded so as to permit hinged rotation of the nozzle 70 about the outlet orifice 35 in the first container 20 while permitting the proximal end 71 of the nozzle 70 to seal the outlet orifice 35 in the first container 20 when positioned parallel to the first container 20. Sealing of the outlet orifice 35 in the first container 20 prevents deactivation of the biocidally effective material 90 by preventing the material 90 from drying out.

The nozzle 70 has an inlet orifice 74 proximate the proximal end 71 of the nozzle 70 and an outlet orifice 75 proximate the distal end 72 of the nozzle 70. A passageway 73 extends through the nozzle 70 and connects the inlet 74 and outlet 75 orifices. The inlet orifice 74 is configured so that the orifice 74 aligns with the outlet orifice 35 in the first container 20 when the nozzle 70 is positioned to extend substantially transversely to the first container 20. The outlet orifice 75 is configured so that purified water 103 exits the nozzle 70 in a downward fashion.

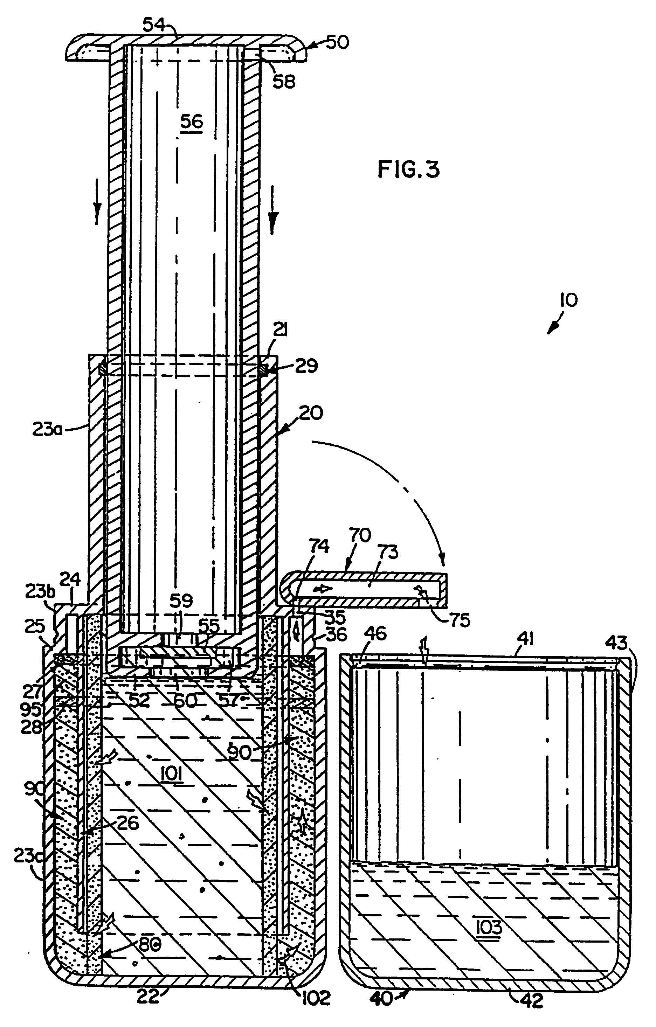

Refering to Figure 3, the second container 40 has an open top 41 and is configured for use as a cover for the first container 20 and as a receptacle for the potable water 103 generated by the system 10. An inwardly extending annular rib 46 is provided on the sidewall 43 of the second container 40 proximate the top 41 of the second container 40. The rib 46 is compatible with an annular notch 36 in the middle section 23b of the first container sidewall 23 for securing the second container 40 over the first container 20. The second container 40 is sized to provide a gap between the upper sidewall section 23a of the first container 20 and the sidewall 43 of the second container 40 which is sufficient to accommodate the nozzle 70 when the nozzle 70 is positioned parallel to the first container 20.

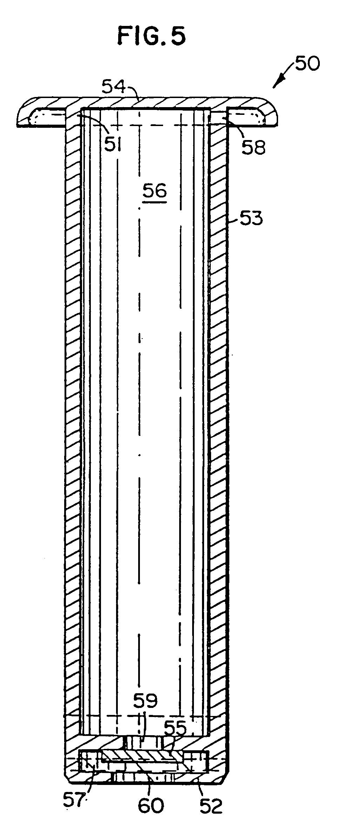

Referring to Figure 5, the plunger 50 is configured to be telescopically received within the upper portion 30a of the first chamber 30 and the central cylindrical cavity 31 subdivision of the lower portion 30b of the first chamber 30. Accordingly, the body of the plunger 50 is constructed as a right circular cylinder with a diameter slightly smaller than the smaller of the diameter of the upper portion 30a of the first chamber and the diameter of the central cavity 31. The proximal end 51 of the plunger 50 is capped with a head 54 which provides a smooth, flat surface against which the palm of the hand may be comfortably placed for forcing the plunger 50 into the first container 20 and applying pressure to the supply of contaminated water 101 retained within the first container 20. The plunger 50 defines an upper chamber 56 and a lower chamber 57. An upper orifice 58 extends through the sidewall 53 of the plunger 50 proximate the proximal end 51 of the plunger 50 for providing access from the upper chamber 56 to the atmosphere. A middle orifice 59 connects the upper chamber 56 and the lower chamber 57. A lower orifice 60 extends through the distal end 52 of the plunger 50 for providing access from the first chamber 30 defined by the first container 20 into the lower chamber 57 defined by the plunger 50. The combination of upper 56 and lower 57 chambers along with the interconnecting upper 58, middle 59, and lower 60 orifices provide a continuous passage from the first chamber 30 to the atmosphere.

A check valve 55, comprising a free-floating disc with several holes extending through the periphery of the disc, is configured within the lower chamber 57 so as to prevent flow through the smaller middle orifice 59 while the plunger 50 is being inserted into the first container 20 but permit flow through the larger lower orifice 60 while the plunger 50 is being withdrawn from the first container 20. The check valve 55 functions to permit the plunger 50 to build pressure within the first chamber 30 during insertion while abating the formation of a vacuum within the first chamber 30 during withdrawal.

The relative heights of the plunger 50 and the first chamber 30 are such that the upper orifice 58 in the sidewall 53 of the plunger 50 will remain in constant communication with the atmosphere. Positioning of the upper orifice 58 within the first chamber 30 would prevent flow from the first chamber 30 to the atmosphere and result in the creation of a vacuum within the first chamber 30 when the plunger 50 is being withdrawn from the first chamber 30 until the upper orifice 58 is moved out of the first chamber 30.

A seal 29 is provided proximate the top 21 of the first container 20 to sealingly engage the sidewall 53 of the plunger 50.

The first container 20, second container 40, and plunger 50 may be constructed from any suitable structural material including wood, metal and plastic with molded plastic constituting the material of choice.
*** The filter 80 functions to remove both suspended solids and larger pathogens from the contaminated water 101.
Removal of the suspended solids renders the water aesthetically agreeable and palatably acceptable. Generally, removal of those suspended solids which are visible to the naked eye (greater than about 40 microns) achieves the desired results. Removal of the larger pathogens is necessary because such pathogens are effectively resistant to chemical disinfection by the biocidally effective material 90. The larger pathogens generally resistant to chemical disinfection are cysts such as Giardia lamblia and Giardia muris which are typically about 6 microns in size. Because of the significantly smaller size of the pathogens which must be removed (6 microns) as compared to the suspended solids (40 microns), pathogen removal controls selection of the filter media 80.

The United States Environmental Protection Agency recommends that microbiological water purifiers achieve at least a three-log (99.9%) reduction in the concentration of cysts such as Giardia lamblia and Giardia muris which are difficult to control by chemical means. Accordingly, the filter media 80 employed in the present invention should be capable of ensuring at least a three-log reduction in the concentration of cysts such as Giardia lamblia and Giardia muris.

The filter 80 may be constructed from any porous material capable of providing the necessary cyst reduction, structural integrity and chemical compatibility including carbon block, ceramic, woven and nonwoven fiber, natural and synthetic membranes, and the like.

The biocidally effective material 90 may be any sufficiently porous, biocidally effective material capable of disinfecting contaminated water with a single pass. Examples of biocidally effective materials suitable for use in the present invention are disclosed in United States Patents Nos. 4,238,477 and 3,817,860 issued to Lambert et al. Briefly, these references describe iodinated anion exchange resins, such a iodinated quaternary ammonium resins, which are effective for disinfecting contaminated water by percolation of the contaminated water through the resin.

The amount of biocidally effective resin 90 which should be employed within the system 10 depends upon a number of factors including the type and porosity of the biocidally effective resin, the configuration of the biocidally effective resin within the system 10, the rate of water flow through the system, and others. ***
Generally, when an iodinated anion exchange resin is employed, the volumetric ratio of resin to water passing through the resin every second should be at least 2.5 and preferably at least 3.

The first screen 27 may be constructed from any suitably porous material capable of retaining the biocidally effective material 90 and the optional active component(s) 95 in the lower portion 33b of the outer annular cavity 33 while permitting substantially unrestricted flow of potable water through the screen 27. The second screen 28 may be constructed from any suitably porous material capable of maintaining separation of the biocidally effective material 90 and the optional active component(s) 95 while permitting substantially unrestricted flow of potable water through the screen 28. Suitable materials for use as the screens 27,28 include woven and nonwoven fibers of plastic, glass or other material which is chemically compatible with the biocidally effective material 90.

A layer(s) of an active component(s) 95 may optionally be placed within the lower portion 33b of the outer annular cavity 33 downstream from the biocidally effective material 90 for achieving a desired effect upon the purified water 103 such as a layer of activated carbon to remove undesirable tastes and odors, and/or a chelating agent to remove hardness ions from the purified water 103. When a layer(s) of the optional active component(s) 95 is employed, a second annular screen 28 should be placed between the layer of biocidally effective material 90 and the optional layer(s) of active component(s) 95 as well as between layers of active components 95 when multiple layers of different active components are employed (not shown) to maintain separation of the materials 90,95.

The system 10 may be constructed to substantially any size but should generally provide a contaminated water 101 retention volume (displacement) defined by the first chamber upper portion 30A and the first chamber central cavity subdivision 31 of about 0.05 to about 0.2 liters. A system 10 providing a displacement of less than about 0.05 liters is laborious to operate because of the number of strokes required while a system 10 providing a displacement of greater than about 0.2 liters is excessively cumbersome to transport and requires the use of significant energy to operate.

A typical system 10 providing a displacement of about 100 ml requires about 4 to about 10 seconds to fully depress the plunger 50 when the lower portion of the first chamber is filled with contaminated water 101.

Depending upon several variables including the type of biocidally effective material 90 employed and the material of construction, a system 10 providing a displacement of about 100 to 200 ml will typically weight about 300 to about 500 grams.

Depending upon various factors including the average pore size and porosity of the filter 80, the average pore size and porosity of the biocidally effective material 90, and the number and type of additional active components 95, a typical system 10 should cause a pressure drop between the central cavity 31 and the outlet orifice 35 in the first container 20 of about 5 to about 10 psig.

### Operation

Refering to Figure 3, operation of the system 10 includes the steps of (i) separating the first 20 and second 40 containers, (ii) withdrawing the plunger 50 from the first container 20, (iii) pouring a supply of contaminated water 101 into the first container 20 through the open top 21, (iv) opening the outlet orifice 35 in the first container 20 by rotating the nozzle 70 from the parallel position to the transverse position, (v) positioning the second container 40 under the outlet orifice 75 in the nozzle 70, (vi) reinserting the plunger 50 into the first container 20, and (vii) applying pressure to the contaminated water 101 retained within the first container 20 by pushing the plunger 50 against the contaminated water 101.

Alternatively, steps (ii) and (iii) may be modified to (ii) depressing the plunger 50 completely into the first container 20, (iii) (a) pouring a supply of contaminated water 101 into the upper chamber 56 of the plunger 50 through the upper orifice 58 in the plunger 50 (preferably positioned through the head 54 of the plunger 50), and (iii)(b) pulling upward on the plunger 50 so as to open the check-valve 55 and suction the contaminated water 101 retained within the upper chamber 56 of the plunger 50 into the first chamber central cavity subdivision 31 and first chamber upper portion 30A.

The application of pressure to the contaminated water 101 retained within the first container 20 causes the contaminated water 101 to flow from the central cavity 31 through the filter 80 and into the inner annular cavity 32. The baffle 26 then directs the filtered water 102 in the inner annular cavity 32 down towards the annular passage 34 between the baffle 26 and the bottom 22 of the first container 20. The filtered water 102 passes through the annular passage 34 into the lower portion 33b of the outer annular cavity 33 where the filtered water 102 percolates up through the biocidally effective material 90 and the activated carbon 95 retained within the lower portion 33b of the outer annular cavity 33. The potable water 103 then passes from the lower portion 33b of the outer annular cavity 33 through the screen 27, into the upper portion 33a of the outer annular cavity 33, out of the first container 20 through the outlet orifice 35 in the first container 20, into the nozzle 70 through the inlet orifice 74 in the nozzle 70, and out of the nozzle 70 through the outlet orifice 75 in the nozzle 70.

## Claims

1. A filtering apparatus (10) for obtaining potable water (103) from contaminated water (101) having suspended solids including cysts, bacteria and viruses therein, said apparatus including a first container (20) and a filter (80) separating said first container into first (31) and second (32, 33) portions, said first portion (31) holding the contaminated water, and further including a plunger (50) and a porous body (90) of a biocidally effective material, **characterized** in that the first portion (31) of said first container (20) is a cylindrical cavity concentrically surrounded by the filter element (80) that the first container (20) includes the porous body (90) of a biocidally effective material, and that the first portion (31) of said first container (20) and the plunger (50) have sidewalls (23, 53) being movably sealed together by sealing means (29) so that the contaminated water does not pass the sealing means (29) as the plunger (50) is caused to apply force to said contaminated water.

2. The filtering apparatus of claim 1**, characterized** in that it further includes a second container (40) comprising means (36, 46) for coupling with the first containter (20) to completely enclose the plunger (50).

3. The filtering apparatus of claim 1, **characterized** in that it further includes a nozzle (70) in hinged communication with an outlet orifice (35) for sealing said outlet orifice when placed in a first position and directing the flow of potable water from said outlet orifice when placed in a second position.

4. The filtering apparatus of claim 3, **characterized** in that (i) the first container has a longitudinally extending sidewall (23), and that (ii) the nozzle (70) extends in parallel with the first container sidewall in the first position and transversely to the first container sidewall in the second position.

5. The filtering apparatus of claim 1, **characterized** in that the porous body (90) of a biocidally effective material comprises an impregnated resin retained in such a way that the contaminated water must percolate through the impregnated resin to pass through the second portion of the first container (20).

6. The filtering apparatus of claim 1, **characterized** in:
(a) that the first container (20) is cylindrical and has an open end and an outlet orifice (35) and defines an upper cylindrical chamber (30a) having a first diameter and a lower cylindrical chamber (30b) having a second diameter wherein the second diameter is greater than the first diameter,
(b) that the filter (80) is cylindrical and operably positioned within the lower cylindrical chamber of the first container so as to divide the lower chamber into a central cavity (31) longitudinally aligned with the upper chamber and an annular cavity (32, 33) surrounding the central cavity,
(c) that the apparatus further includes a cylindrical baffle (26) dividing the annular cavity into an inner annular cavity (32) and an outer annular cavity (33) for directing flow downwardly through the inner annular cavity and upwardly through the outer annular cavity,
(d) that the porous body (90) of a biocidally effective material is operably positioned within the outer annular cavity, and (e) that the plunger (50) is sealably and reciprocally retained within the first container (20) through the open end for forcing contaminated water retained within the central cavity (31) through the filter (80), around the baffle (26), through the porous body (90) of a biocidally effective material, and out of the first container (20) through the outlet orifice (35).

7. The filtering apparatus of claim 1, **characterized** in that, in addition to the plunger (50), it includes means comprising a check valve (55) and middle and lower orifices (59, 60) in fluid communication with the first portion (31) for abating the formation of a vacuum within said first portion when the plunger is withdrawn from the first portion and thereby reducing the return passage of fluid through the filter (80) from the second portion (32) into the first portion (31).

8. The filtering apparatus of claim 7, **characterized** by further comprising a second container (40) including a rib (46) for coupling with the first containter (20) to completely enclose the plunger (50).

9. The filtering apparatus of claim 7 wherein the means (55, 59, 60) for abating the formation of a vacuum within the first portion comprises (i) a passage (59, 60) directly connecting the first portion and the atmosphere, and (ii) a one-way valve (55) within the passage which prevents fluid flow through the passage as the plunger 850) moves in a first direction and permits fluid flow through the passage as the plunger moves in a second direction.

## Patentansprüche

1. Filtervorrichtung (10) zum Gewinnen von Trinkwasser (103) aus verunreinigtem, Schwebstoffe wie Zellen, Bakterien sowie Viren enthaltendem Wasser (101), welche einen ersten Behälter (20) und einen Filter (80) aufweist, der den ersten Behälter in einen ersten, das verunreinigte Wasser aufnehmenden Abschnitt (31) sowie zweiten Abschnitt (32, 33) aufteilt, und welche weiterhin einen Kolben (50) sowie einen porösen Körper (90) aus einem biozidwirksamen Material aufweist, dadurch gekennzeichnet, daß der erste Abschnitt (31) des ersten Behälters (20) ein zylindrischer Hohlraum ist, der konzentrisch von dem Filterelement (80) umgeben ist, daß der erste Behälter (20) den porösen Körper (90) aus einem biozidwirksamen Material aufnimmt, und daß der erste Abschnitt (31) des ersten Behälters (20) sowie der Kolben (50) Seitenwände (23, 53) aufweisen, die durch Dichtmittel (29) gegeneinander abgedichtet und relativ zueinander bewegbar sind, so daß das verunreinigte Wasser nicht an den Dichtmitteln (29) vorbeiströmen kann, wenn mittels des Kolbens (50) eine Kraft auf das verunreinigte Wasser ausgeübt wird.

2. Filtervorrichtung nach Anspruch 1,
dadurch gekennzeichnet, daß weiterhin ein zweiter Behälter (40) vorgesehen ist, der Mittel (36, 46) zum Kuppeln mit dem ersten Behälter (20) umfaßt, um den Kolben (50) vollständig zu umschließen.

3. Filtervorrichtung nach Anspruch 1,
dadurch gekennzeichnet, daß weiterhin ein mit einer Auslaßöffnung (35) in Verbindung bringbarer Ausguß (70) vorgesehen ist, der schwenkbar ist, um die Auslaßöffnung abzudichten, wenn er in einer ersten Stellung angeordnet ist, und einen Trinkwasserstrom aus der Auslaßöffnung austreten zulassen, wenn er in einer zweiten Stellung angeordnet ist.

4. Filtervorrichtung nach Anspruch 3,
dadurch gekennzeichnet, daß (i) der erste Behälter eine sich im wesentlichen in Längsrichtung erstreckende Seitenwand (23) aufweist, und daß (i i) sich der Ausguß (70) parallel zu der Seitenwand des ersten Behälters in der ersten Stellung und senkrecht zu der Seitenwand des ersten Behälters in der zweiten Stellung erstreckt.

5. Filtervorrichtung nach Anspruch 1,
dadurch gekennzeichnet, daß der poröse Körper (90) aus einem biozidwirksamen Material ein Tränkharz in der Weise umfaßt, daß das verunreinigte Wasser durch das Tränkharz durchsickern muß, um den zweiten Abschnitt des ersten Behälters (20) zu durchlaufen.

6. Filtervorrichtung nach Anspruch 1,
dadurch gekennzeichnet:
(a) daß der erste Behälter (20) zylindrisch ist, ein offenes Ende sowie eine Auslaßöffnung (35) aufweist und eine obere zylindrische Kammer (30a), die einen ersten Durchmesser besitzt, sowie eine untere zylindrische Kammer (30b) definiert, die einen zweiten Durchmesser besitzt, der größer als der erste Durchmesser ist,
(b) daß der Filter (80) zylindrisch ist und innerhalb der unteren zylindrischen Kammer des ersten Behälters so angeordnet ist, daß er die untere Kammer in einen in Längsrichtung mit der oberen Kammer fluchtenden, zentralen Hohlraum (31) sowie einen den zentralen Hohlraum umgebenden, ringförmigen Hohlraum (32, 33) aufteilt,
(c) daß die Vorrichtung weiterhin eine zylindrische Trennwand (26) aufweist, die den ringförmigen Hohlraum in einen inneren ringförmigen Hohlraum (32) und einen äußeren ringförmigen Hohlraum (33) aufteilt, so daß der Wasserstrom abwärts durch den inneren ringförmigen Hohlraum und aufwärts durch den äußeren ringförmigen Hohlraum geführt wird,
(d) daß der poröse Körper (90) aus einem biozidwirksamen Material innerhalb des äußeren ringförmigen Hohlraums angeordnet ist, und
(e) daß der Kolben (50) abgedichtet innerhalb des ersten Behälters (20) durch das obere Ende hindurch hin- und herbewegbar ist, um das innerhalb des zentralen Hohlraums (31) aufgenommene, verunreinigte Wasser durch den Filter (80) hindurch, um die Trennwand (26) herum, durch den porösen Körper (90) aus einem biozidwirksamen Material hindurch und aus dem ersten Behälter (20) durch die Auslaßöffnung (35) hinaus zu führen.

7. Filtervorrichtung nach Anspruch 1,
dadurch gekennzeichnet, daß zu dem Kolben (50) Mittel vorgesehen sind, die ein Rückschlagventil (55) sowie mittlere und untere Öffnungen (59, 60) umfassen, die in Fluidverbindung mit dem ersten Abschnitt (31) stehen, um die Vakuumbildung innerhalb des ersten Abschnittes zu verringern, wenn der Kolben aus dem ersten Abschnitt herausgezogen wird, und um dadurch den Rücklauf des Fluids aus dem zweiten Abschnitt (32) durch den Filter (80) in den ersten Abschnitt (31) herabzusetzen.

8. Filtervorrichtung nach Anspruch 7,
dadurch gekennzeichnet, daß ein zweiter Behälter (40) vorgesehen ist, der eine Rippe (46) zum Kuppeln mit dem ersten Behälter (20) umfaßt, um den Kolben (50) vollständig zu umschließen.

9. Filtervorrichtung nach Anspruch 7,
bei der die Mittel (55, 59, 60) zur Verringerung der Vakuumbildung innerhalb des ersten Abschnittes (i) einen Kanal (59, 60), der direkt mit dem ersten Abschnitt sowie der Atmosphäre in Verbindung steht, und (ii) ein Rückschlagventil (55) innerhalb des Kanals umfassen, welches eine Fluidströmung durch den Kanal verhindert, wenn der Kolben (50) sich in eine erste Richtung bewegt, und Fluidströmung durch den Kanal gestattet, wenn sich der Kolben in eine zweite Richtung bewegt.

## Revendications

1. Appareil de filtrage (10) pour obtenir de l'eau potable (103) à partir d'eau polluée (101) contenant des solides en suspension tels que des kystes, des bactéries et des virus, ledit appareil comprenant un premier réservoir (20) et un filtre (80) séparant, ledit premier réservoir en une première (31) et une seconde (32, 33) parties, ladite première partie (31) contenant l'eau polluée, et comprenant de plus un piston (50) et un corps poreux (90) de matériau biocide,
caractérisé en ce que ladite première partie (31) dudit premier réservoir (20) est une cavité cylindrique entourée par et concentrique au filtre (80), en ce que le premier réservoir (20) comprend le corps poreux (90) de matériau biocide, et en ce que la première partie (31) dudit premier réservoir (20) et le piston (50) ont des parois latérales (23, 53) rendues hermétiques et mobiles l'une par rapport à l'autre par des moyens d'étanchéification (29) de façon que l'eau polluée ne traverse pas les moyens d'étanchéification (29) lorsque le piston (50) est actionné pour pousser ladite eau polluée.

2. Appareil de filtrage selon la revendication 1, caractérisé en ce qu'il comprend de plus un second réservoir (40) comprenant des moyens (36, 46) pour le coupler avec le premier réservoir (20) de façon à englober complètement le piston (50).

3. Appareil selon la revendication 1, caractérisé en ce qu'il comprend de plus une base (70) reliée monté en charnière sur un orifice d'évacuation (35) de façon à assurer l'étanchéité dudit orifice d'évacuation quand il est placé dans une première position et à diriger l'évacuation du flux d'eau potable dudit orifice d'évacuation quand il est placé dans une seconde position.

4. Appareil de filtrage selon la revendication 3, caractérisé en ce que (i) le premier réservoir a une paroi latérale (23) s'étendant longitudinalement, et en ce que (ii) la buse (70) est parallèle à la paroi latérale du premier réservoir lorsqu'il est placé dans sa première position et transversal à celle-ci lorsqu'il est placé dans sa seconde position.

5. Appareil de filtrage selon la revendication 1, caractérisé en ce que le corps poreux (90) de matériau biocide comprend une résine imprégnée placée de façon que l'eau polluée doive passer à travers la résine imprégné pour passer au travers de la seconde partie du premier réservoir (20).

6. Appareil de filtrage selon la revendication 1, caractérisé en ce que :
(a) le premier réservoir (20) est cylindrique et possède une ouverture et un orifice d'évacuation (35) et définit une chambre supérieure (30a) cylindrique ayant un premier diamètre et une chambre inférieure (30b) cylindrique ayant un second diamètre, le second diamètre étant supérieur au premier,
(b) le filtre (80) est cylindrique est placé à l'intérieur de la chambre inférieure cylindrique du premier réservoir de façon à diviser la chambre inférieure en une cavité centrale (31) alignée longitudinalement à la chambre supérieure et en une cavité annulaire (32, 33) entourant la cavité centrale,
(c) l'appareil comprend de plus une paroi (26) cylindrique divisant la cavité annulaire en une cavité annulaire intérieure (32) et une cavité annulaire extérieure (33) afin de diriger le flux vers le bas à travers la cavité annulaire intérieure, et vers le haut à travers la cavité annulaire extérieure,
(d) le corps poreux (90) de matériau biocide est placé à l'intérieur de la cavité annulaire extérieure, et
(e) le piston (50) est hermétiquement et interactivement retenu à l'intérieur de la cavité centrale (31) à travers du filtre (80), autour de la paroi (26), à travers le corps poreux (90) de matériau biocide, et à l'extérieur du premier réservoir (20) à travers l'orifice d'évacuation (35).

7. Appareil de filtrage selon la revendication 1, caractérisé en ce que, en plus dit piston (50), il comprend des moyens comprenant un clapet anti-retour (55) et des orifices médians et inférieurs (59,60) permettant le passage de fluide dans la première partie (31) pour réduire la quantité de vide formé à l'intérieur de ladite première partie quand le piston se retire de celle-ci, et ainsi réduire le refoulement de fluide à travers le filtre (80) de la seconde partie (32) dans la première partie (31).

8. Appareil de filtrage selon la revendication 7, caractérisé en ce qu'il comprend de plus un second réservoir (40) comprenant un rebord pour le coupler au premier réservoir (20), de façon à entourer complètement le piston (50).

9. Appareil de filtrage selon la revendication 7, caractérisé en ce que les moyens (55, 59, 60) pour réduire la formation de vide à l'intérieur de la première partie comprennent (i) un passage (59, 60) reliant directement la première partie à l'extérieur, et (ii) un clapet anti-retour (55) à l'intérieur du passage pour éviter la circulation de fluide à travers le passage quand le piston (50) se déplace dans une première direction, et permet la circulation de fluide dans le passage quand le piston se déplace dans une seconde direction.
